# EUROPEAN PATENT SPECIFICATION

(11) **EP 2 778 067 B1**
(45) Date of publication and mention of the grant of the patent: **13.04.2016**
(21) Application number: 13187447.1
(22) Date of filing: 04.10.2013
(51) Int. Cl.: B64D 25/18, B64C 25/56

(54) **Crash load attenuator for water ditching and floatation**
Crashlastdämpfer für Wasserlandungen
Atténuateur de charge pour dispositif d'amerrissage et de flottaison

(30) Priority: 15.03.2013 US 201313840911
(43) Date of publication of application: 17.09.2014
(73) Proprietor: Bell Helicopter Textron Inc., Fort Worth, TX 76101 (US)
(72) Inventor: Smith, Michael R, Colleyville, TX Texas 76034 (US); Tho, Cheng-Ho, Irving, TX Texas 75039 (US)
(74) Representative: Lawrence, John

(56) References cited:
- CA-A1- 2 538 477
- GB-A- 2 457 719
- US-A- 2 955 785
- US-A1- 2010 155 537
- US-B1- 6 220 547

## Description

### BACKGROUND

Aircraft may be forced to make an emergency landing in water. In some cases, the aircraft may be equipped with inflatable devices, for example, float bags. The float bags may be inflated prior to, simultaneous with, or subsequent to the aircraft landing in water. The structure of the aircraft may be designed to withstand the force of the landing on the float bags.

Examples of inflatable devices for aircraft and vehicles are described in US 2,955,785, CA 2,538,477 and GB 2,457,719.

In US 2,955,785 a float landing gear is disclosed that comprises floating bags attached to an airframe fitting by rigid rods that are slid into straps. At spaced points along the length of the straps, small metal plates are fixed by bolts. Further bolts pass through the metal plates, the straps and the rods to prevent movement between the straps and the rods. In CA 2,538,477 an inflatable floatation system is described that comprises an inflatable bladder housed inside rigid elongate polymer cylinders, which inflates by action of compressed CO₂ canisters. The cylinders are attached to the vehicle by rigid brackets. Whereas in GB 2,457,719, an inflatable balloon is adhesively bonded to a fixing bracket which allows the balloon to be coupled to the skid of a helicopter.

### SUMMARY

The present invention provides an apparatus as defined in Claim 1 and a method as defined in Claim 7.

### BRIEF DESCRIPTION OF THE DRAWINGS

For a more complete understanding of the present disclosure and the advantages thereof, reference is now made to the following brief description, taken in connection with the accompanying drawings and detailed description:
FIG. 1 is a perspective view of an embodiment an aircraft comprising float bags;
FIG. 2 is a perspective view of an aircraft float bag installation location;
FIG. 3 is a perspective view of another embodiment an aircraft comprising float bags;
FIG. 4 is a perspective view of a float bag and the load attenuator;
FIG. 5 is a perspective view of a textile load attenuator;
FIG. 6 is a cross-sectional view of a frangible load attenuator;
FIG. 7 is a graph of forces experienced with and without load attenuators installed; and
FIG. 8 is a flowchart of a method for selecting and using a float bag comprising a load attenuator.

### DETAILED DESCRIPTION

It should be understood that the disclosure should in no way be limited to the illustrative implementations, drawings, and techniques illustrated below, including the exemplary designs and implementations illustrated and described herein, but may be modified within the scope of the appended claims along with their full scope of equivalents.

Aircraft may occasionally make emergency landings or be forced to ditch in bodies of water. Certain regulations may specify certain ditching certification requirements for emergency water landings to minimize the probability of immediate injury to or provide escape/egress provisions for the occupants of an aircraft. In order to allow occupants of the aircraft a better chance to escape after a water landing, flotation devices (e.g. float bags) may be installed on the aircraft. As used herein, the term float bag may refer to any flotation device used on an aircraft for water landings whether temporary (e.g. inflatable float bags) or permanent (e.g. pontoons or floats). The float bags may allow for the aircraft to remain sufficiently upright and in adequate trim to permit safe and orderly evacuation of all personal and passengers of the aircraft.

Float bags may be required for aircraft that operate over water. The float bags may be attached to the airframe using airframe fittings, and the float bags may be inflated prior to, simultaneous with, or subsequent to the aircraft making a water landing. The airframe may be designed to support the load experienced by the float bags during a water landing. In order to reduce the load transmitted to the airframe, a load attenuator may be installed between the float bag and the airframe. The load attenuator may reduce the load transmitted to the airframe and may therefore allow a lighter weight airframe (e.g. an airframe with less mass) and/or float bag supports to be used. In addition, the load attenuators may allow the aircraft to sit lower in the water, thereby lowering the center of gravity and reducing the possibility of the aircraft capsizing after a water landing.

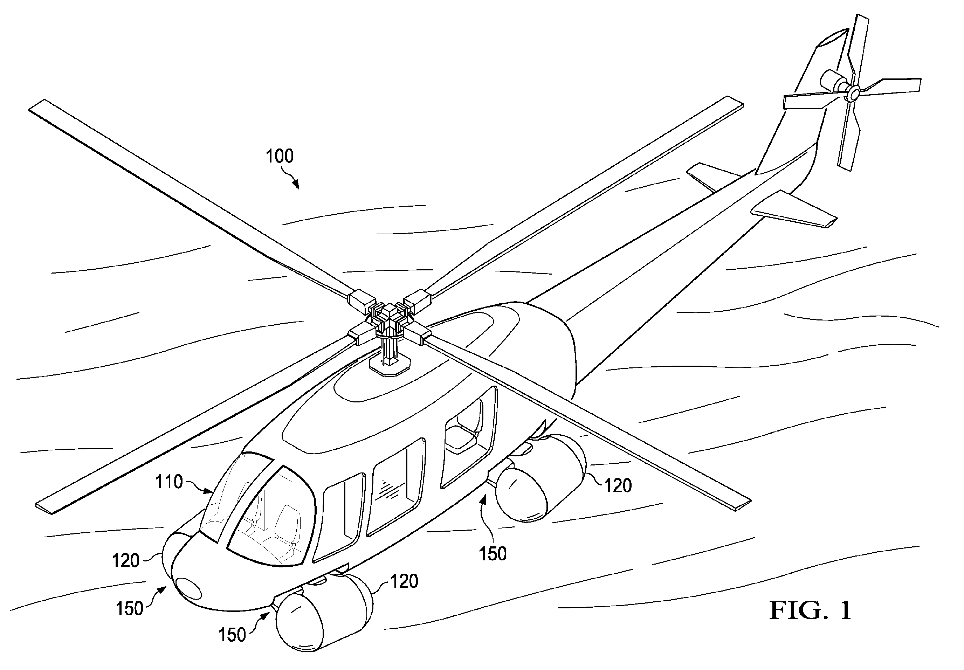

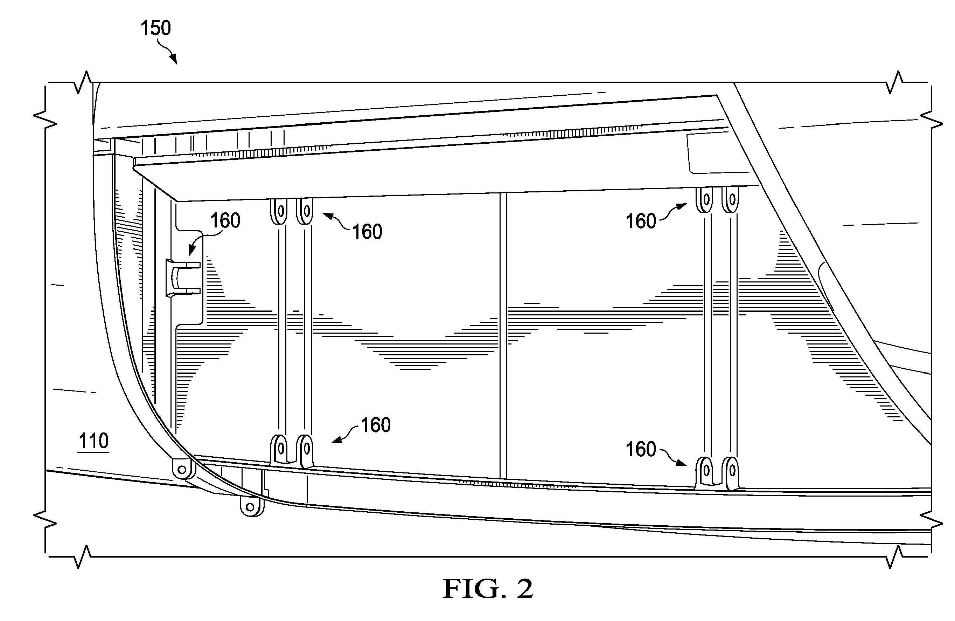

FIG. 1 is a perspective view of an embodiment of an aircraft 100 comprising float bags 120. The aircraft 100 comprises an airframe 110 (e.g. fuselage) that may comprise an engine, transmission, avionics, main and tail rotors, tail boom, landing gear (e.g. fixed or retractable landing gear), etc. that allow the aircraft to be operated. The aircraft 100 may comprise one or a plurality of float bags 120. While four float bags 120 are depicted, any number of float bags 120 may be used depending upon the characteristics of the airframe 110 and/or the characteristics of the float bags 120. The float bags 120 may be coupled to the airframe 110 at float bag installation locations 150, an embodiment of which is shown in FIG. 2. It will be appreciated that the float bags 120 may be attached to the airframe 110 using any suitable connections that maintain the aircraft 100 in an orientation that permits safe egress of the occupants (e.g. passengers and flight crew) in the event of a water landing. The float bags 120 are typically attached to the airframe 110 in a compact or deflated state during ground and air operations (although an inflated configuration is included within the scope of this disclosure). The float bags 120 may automatically deploy if a water landing is detected by sensors on the aircraft 100 and/or the float bags 120. Alternatively, the flight crew may deploy or inflate the float bags 120 when needed. Finally, although a helicopter is illustrated in FIG. 1, the disclosed systems and methods may be applied to any type of aircraft, such as airplanes or tilt-rotor aircraft, as well as any other types of vehicles.

The airframe 110 may be manufactured such that it withstands the load placed on it when the aircraft 100 makes a water landing with the float bags 120 in either an inflated or a deflated state. In order to reduce the load placed on the airframe 110 during a water landing, a load attenuator may be installed between the float bags 120 and the airframe 110. For example, one end of a load attenuator may be coupled to the float bag 120 and a second end of the load attenuator may be coupled to the airframe fittings that are part of the airframe 110. In aircraft without load attenuators, the float bag peak retention load under probable water conditions (e.g. sea state 4 or sea state 6) is significantly high such that the airframe fittings may need to be enlarged to properly carry such a high load. Typically, aircraft without load attenuators may require a relatively heavy frame compared to the airframe 110, which comprises float bags 120 with load attenuators.

FIG. 2 is a perspective view of a float bag installation location 150. The float bag installation location 150 may be located on the outside of the airframe 110 (e.g. on the sides, front, back, or bottom, such as the keel boom, of the airframe 110, or on the tail boom), on the inside of the airframe 110 (e.g. on the floor of the airframe 110), or combinations thereof. In some embodiments, the float bag installation location 150 may be covered with a panel when the float bags 120 are not installed on the airframe 110 (e.g. to promote aerodynamic efficiency). In other embodiments, the float bag installation location 150 may comprise a cavity sized such that the float bags 120 are installed therein and an aerodynamic cover may be placed over the float bags 120. The aerodynamic cover may open or be disconnected from the airframe 110 upon deployment of the float bags 120. Alternatively, the float bags 120 may be aerodynamically shaped. In any of these embodiments, float bags 120 are not sufficiently constrained such that the float bags 120 are prevented from opening and/or deploying in the event of a water landing.

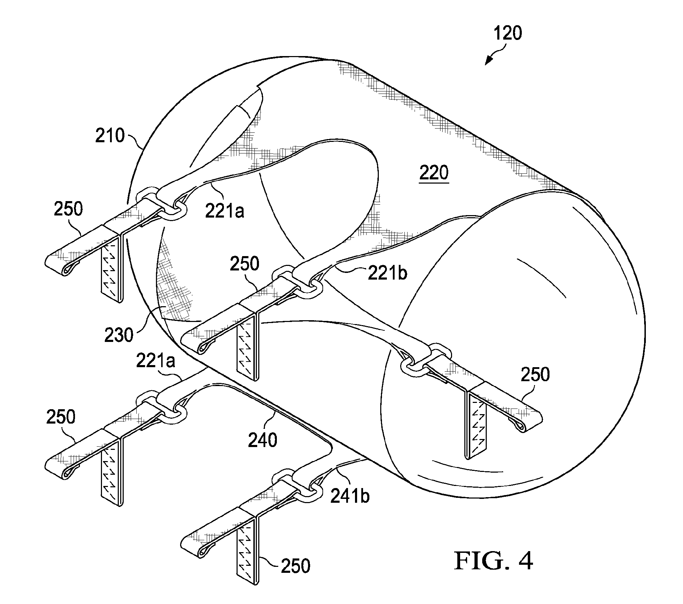

The float bag installation location 150 may comprise a plurality of airframe fittings 160. In FIG. 2, the float bag 120 has been removed to better illustrate the airframe fittings 160. The expected sea conditions, the aircraft size, as well as the specific type of float bag 120 may dictate the location and number of the airframe fittings 160. The airframe fittings 160 may be sized and/or otherwise configured to allow the float bag 120 girts (shown in FIG. 4) to be attached. The airframe fittings 160 may be a loop, stud, any other suitable attachment point, or combinations thereof. While five pairs of airframe fittings 160 are shown, any number of airframe fittings 160 may be used.

The airframe fittings 160 may be configured such that some airframe fittings 160 have differing functions than other airframe fittings 160. It should be understood that the primary responsibility of the airframe fittings 160 is to maintain connectivity between the airframe 110 and the float bags 120. However, some of the airframe fittings 160 may be further configured to support drag loads (e.g. aerodynamic drag forces during forward flight or water drag caused by the water acting on the float bags 120), other airframe fittings 160 may be further configured to support the weight of the float bags 120, and yet other airframe fittings 160 may be configured to keep the float bags 120 close to the airframe 110 once the float bags are deployed. Various types of such airframe fittings 160 may be used on the aircraft 100.

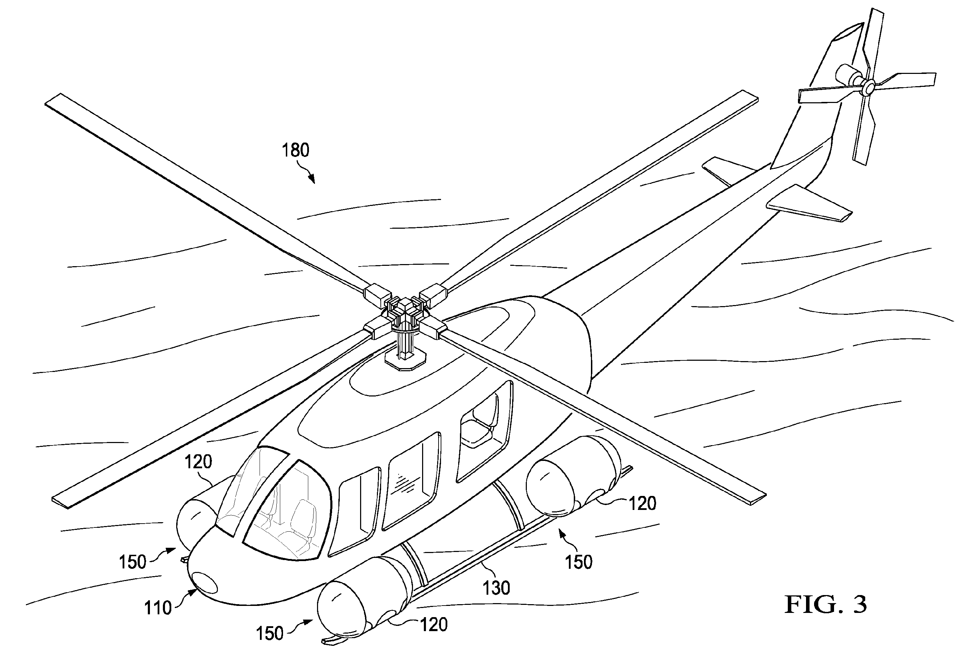

FIG. 3 is a perspective view of another embodiment of an aircraft 180 comprising float bags 120. The aircraft 180 is similar to the aircraft 100 described above, and thus only the differences are discussed herein. Unlike aircraft 100 which contains retractable landing gear, aircraft 180 comprises fixed landing gear 130 (e.g. skids). In FIG. 3, the float bags 120 are coupled to the landing gear 130, but in some instances the float bags 120 may be coupled to both the airframe 110 and the landing gear 130. For example, the float bags 120 may be coupled to both the airframe 110 and the landing gear 130 either separately (e.g. some float bags 120 coupled to the landing gear 130 and some float bags 120 coupled to the airframe 110) or in combination (e.g. at least one float bag 120 simultaneously coupled to the landing gear 130 and the airframe 110). Alternatively, the float bags 120 may be coupled to an intermediary surface or device that may be coupled to the airframe 110 (e.g. a pylon). As with the aircraft 100, the float bag installation locations 150 may be selected such that upon a water landing, the aircraft's 180 points of egress are above the expected waterline, thus preventing excessive amounts of water from entering the aircraft 180.

FIG. 4 is a perspective view of a float bag 120. The float bag 120 may comprise an air bladder 210, an upper load girt 220, a lower load girt 240, a drag girt 230, and several load attenuators 250. The air bladder 210 may be any non-permeable material capable of containing air or other gasses and that is configured to provide bouncy for the airframe while in the water. The air bladder 210 may be divided into several air chambers, such that if one of the chambers is punctured, the float bag 120 retains buoyancy. The air bladder 210 may also comprise water sensors and compressed air (or other gas) tanks that allow the float bag 120 to deploy when a water landing occurs.

The upper load girt 220 may be attached to the air bladder 210 and may be configured to attach to the airframe (e.g. via the airframe fittings 160). The upper load girt 220 may be made of the same material as the air bladder 210, or any other material suitable for attaching the upper load girt 220 to the air bladder 210. The upper load girt 220 may be made of a material that is flexible such that the air bladder 210 and upper load girt 220 may be stored in a deflated state, e.g. in a storage container or within a cavity in the aircraft. Also, the upper load girt 220 is shown with two arms 221a, 221b, but may comprise any number of arms 221.

The lower load girt 240 may be attached to the air bladder 210 and may be configured to attach to the airframe (e.g. via the airframe fittings 160). The lower load girt 240 may be made of the same material as the air bladder 210, or any other material suitable for attaching the lower load girt 240 to the air bladder 210. The lower load girt 240 may be made of a material that is flexible such that the air bladder 210 and lower load girt 240 may be stored in a deflated state, e.g. in a storage container or within a cavity in the aircraft. Also, the lower load girt 240 is shown with two arms 241a, 241b, but may comprise any number of arms 241.

The drag girt 230 may be attached to the air bladder 210 and may be configured to attach to the airframe (e.g. via the airframe fittings 160). The drag girt 230 may be made of the same material as the air bladder 210, or any other material suitable for attaching the drag girt 230 to the air bladder 210. The drag girt 230 may be made of a material that is flexible such that the air bladder 210 and drag girt 230 may be stored in a deflated state, e.g. in a storage container or within a cavity in the aircraft. Also, the drag girt 230 is shown with one arm 231, but may comprise any number of arms 231.

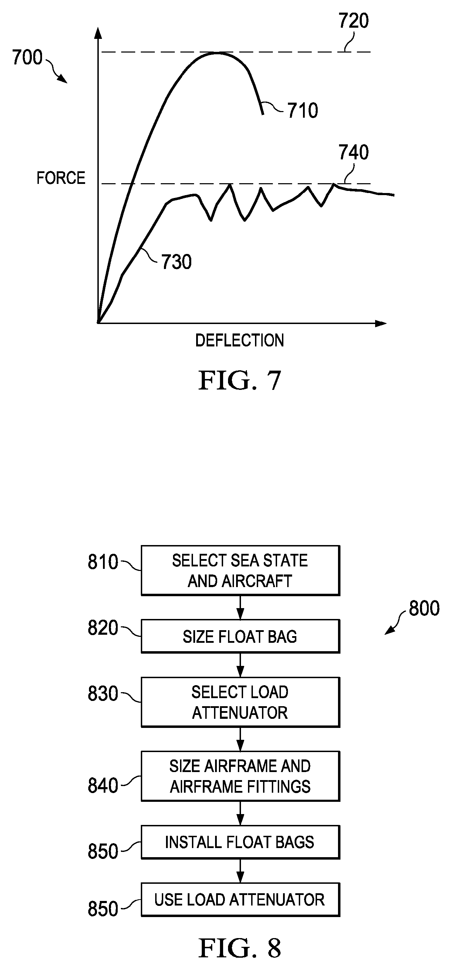

Any number or all of the upper load girt 220, the lower load girt 240, and the drag girt 230 (collectively, girts) may comprise a load attenuator 250. As used herein, the term load attenuator may refer to any device that decreases a shock load on at least one end of the device, typically by mechanized deformation of the device. Load attenuator may also be referred to as a load limiter. The load attenuators 250 may be part of the girts (e.g. the girt arms) or may be an intermediary device positioned between the girts and the airframe. The load attenuators 250 are typically designed to mechanically deform but not disconnect two bodies (e.g. the airframe and the float bag) when a tensile force is applied to the load attenuator 250. By incorporating the load attenuators 250, the peak retention load of the float bags during a water ditching or water emergency landing may be greatly reduced relative to a similar situation where no load attenuator 250 is installed. For example and with reference to FIG. 7, the energy absorption can be increased in the case where a load attenuator is installed, because the stroking distance (e.g. distance over which a load is carried) may be increased, and thus the integrated area under the load-deflection curve 730 can be increased relative to the case where the load attenuator is not installed, curve 710.

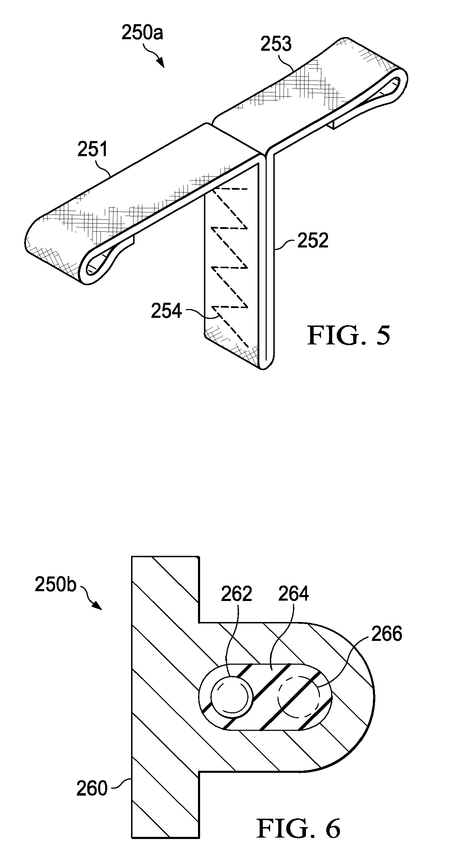

FIG. 5 is a perspective view of a textile load attenuator 250a. The textile load attenuator 250a may be any device that comprises a fabric body and a plurality of stiches in the fabric body that are configured to tear without compromising the fabric body when a tensile load is applied to the textile load attenuator 250a. The fabric in the textile load attenuator 250a may be selected to withstand saltwater environments and other environmental conditions that may be experienced in a water landing.

Textile load attenuator 250a may have a lower strength limit defined by the stitch strength (e.g. a load under which the stiches will not break) and an upper strength limit defined by the load limit of the fabric (e.g. a load that exceeds the tensile strength of the fabric). In some embodiments, the stitch thread and/or stitch density may be consistent throughout the load attenuator 250a such that the load required to break the stitches is consistent as the stitches tear or become undone. Alternatively, the stitch thread and/or stitch density may be varied throughout the load attenuator 250a such that the load required to break the stitches varies (e.g. increases) as the stitches tear or become undone.

The textile load attenuator 250a illustrated in FIG. 5 comprises a single length of fabric comprising a first arm 251, a fold 252, and a second arm 253. The fold 252 comprises a plurality of stitches 254 sewn into the fold 252. When a load is applied to the textile load attenuator 250a and the stitches tear, a straight piece of fabric remains. Although the load attenuator 250a in FIG. 5 is shown in a "T" configuration, other configurations are also available. For example, a "Z" configuration could be created by moving the fold 252 up to the first arm 251 and passing the stitches 254 through all three layers of fabric. In another example, a "ZS" configuration could be made by creating a "Z" configuration next to a mirror image of the "Z" configuration. Alternatively, the load attenuator 250a could comprise multiple folds 252, or perhaps a combination of different folds 252 (e.g. one "T" configuration and one "Z" configuration).

The textile load attenuator 250a illustrated in FIG. 5 but modified to be a tear-fabric configuration rather than a tear-webbing configuration with stitches. The tear-fabric configuration is comprised of a length of fabric 252 having two sides woven together such that when the two sides are pulled apart, the weaving elongates and tears. In such an embodiment, the fabric layers will tear apart (and thereby attenuate the load) to a point, after which the fabric will maintain its structural integrity. This is similar to the embodiment described above where the stitch tear to a point (to attenuate the load), and then the fabric maintains its structural integrity.

FIG. 6 is a perspective view of a mechanical load attenuator 250b, which does not form part of the present invention. A mechanical load attenuator may be any device configured to mechanically deform when a tensile load is applied thereto, but will not mechanically fail to the point where the two ends of the attenuator to which the tensile load is applied become separated from each other. In FIG. 6, the mechanical load attenuator 250b is a frangible load attenuator. A frangible load attenuator may be any device that comprises a body that is designed not to break under the tensile load and an internal structure that is designed to break under the same tensile load. The materials the mechanical load attenuator 250b may be selected to withstand saltwater environments and other environmental conditions that may be experienced in a water landing. The mechanical load attenuator 250b may have a lower strength limit defined by the internal material strength (e.g. a load under which the internal material will not deform) and an upper strength limit defined by the load limit of the body material (e.g. a load that exceeds the tensile strength of the body material). In some embodiments, the internal material may be consistent throughout the load attenuator 250b such that the load required to deform the internal material is consistent as the internal material deforms. Alternatively, the internal material may be varied throughout the load attenuator 250b such that the load required to deform the internal material varies (e.g. increases) as internal material is deformed.

The mechanical load attenuator 250b illustrated in FIG. 6 comprises a non-frangible casing 260 surrounding a frangible support material 264. The frangible support material 264 may have a lower strength (e.g. a lower shear, tensile, or compressive strength) than the non-frangible casing 260 material. For example, the frangible support material 264 may be aluminum or plastic, while the non-frangible casing 260 material may be steel. A non-frangible fastener 262 may be placed in the frangible support material 264. The non-frangible fastener 262 may shear the frangible support material 264 upon experiencing a sufficient load. Upon experiencing an impact with enough force to shear the frangible support material 264, the non-frangible fastener 262 may move to the position indicated at index 266.

Several other examples of mechanical load attenuators exist. For example, the mechanical load attenuator may comprise a pre-twisted length of material (e.g. metal) that untwists when a tensile load is applied thereto. Alternatively, the mechanical load attenuator may comprise a convoluted piece of material (e.g. metal) that straightens when a tensile load is applied thereto. Further in the alternative, the mechanical load attenuator may include a torsion bar that twists when a load is applied thereto. In addition, the mechanical load attenuator may comprise a chamber that is configured to compress when a tensile load is applied thereto (e.g. where the chamber comprises two plates at a proximate end and a distal end, the distal plate is connected to the proximate end and the proximate plate is connected to the distal end. In such a case, the chamber may comprise any suitable compression load attenuator, such as a beam convoluted in cross-section that is forced through a straightener when a force is applied thereto. Such technologies are used in highway guardrails. Furthermore, the mechanical load attenuator may comprise a spring that stretches when a tensile load is applied thereto, but may optionally return to at least part of its original length. Doing so may be desirable because it may bring the float bags closer to the aircraft after a water landing and improve stability and/or raise in the aircraft in the water, which can reduce the amount of water entering the aircraft.

FIG. 7 is a graph 700 of the forces experienced with and without load attenuators installed. Curve 710 is a representation of the forces encountered during a water landing on an aircraft with float bags installed without load attenuators. Curve 730 is a representation of the forces encountered during a water landing on an aircraft with float bags installed with load attenuators. The maximum force experienced without load attenuators 720 may be significantly greater than the maximum force experienced with load attenuators 740. As described above, the load attenuators may function in a progressive failure fashion which may result in limiting the peak load while maintaining a constant load 740. The resulting energy absorption, which is the integrated area under the load-deflection curve, is equal or greater with the load-attenuators installed. It will be appreciated that the load 740 is not required to be constant but can increase or decrease to meet design requirements. Thus, while the graph 700 shows a horizontal line for maximum force experienced with load attenuators 740, the maximum force may in some embodiments vary with deflection (e.g. linear distance) based upon the configuration of a load attenuator used in a progressive failure fashion.

FIG. 8 is a flowchart of a method 800 for providing and using the float bag with load attenuators as described herein. Steps 810-840 generally are referred to as providing the float bag with load attenuators, while steps 850 and 860 describe the use of the float bags with load attenuators. The method 800 may begin at step 810 by selecting a sea state and an aircraft. Sea state conditions are defined by various organizations and scales (e.g. the world meteorological organization, the Douglas Sea Scale, or the Beaufort scale), and various type of aircraft (e.g. helicopters, tiltrotors, airplanes, etc.) are known. The sea state and aircraft are selected so that the loads applied to the float bags can be calculated based on the expected airspeeds, aircraft weights, wave heights, wave configurations, and so forth. For example, the expected loads that the float bag may encounter may be calculated, and then a safety factor may be applied to the expected loads. The method 800 may continue at step 820 by sizing at least one float bag suitable for the aircraft and sea state. The float bags may be sized based on the sea conditions and aircraft weight, and may include a safety factor (e.g. float bags sized for twice needed size).

The method 800 may continue at step 830 where the load attenuators are selected. The load attenuators may be selected based on the expected loads that the float bag will encounter. The type and size of load attenuator selected for use in certain embodiments may depend on one or more of the following factors: characteristics of the aircraft, characteristics of the float bags, and probable water conditions upon landing. The water conditions may be based on various sea states defined by the world meteorological organization, the Douglas Sea Scale, or the Beaufort scale. Certain regulations may require that the aircraft be able to withstand a water landing in certain sea states, for example a sea state 4 or sea state 6. For example, in some embodiments using four float bags, load attenuators may be selected based on the aircraft landing in a body of water under sea state 4 conditions, the selected load attenuators may be able to withstand 3,500 pounds of force without failing (e.g. they attenuate at less than 3,500 pounds, but do not decouple the float bag from the aircraft). Using the same aircraft and float bag characteristics, with an expected sea state of 6, load attenuators may be selected with a value of 6,000 pounds.

The method 800 may continue at step 840 where the airframe and airframe fittings are sized. The load attenuators allow the airframe and/or airframe fittings to be smaller than the airframe and/or airframe fittings used on aircraft with no load attenuators on the float bags. For example, the load attenuators may allow the airframe and/or airframe fittings to be about 30%, about 40% or about 50% smaller than the airframe and/or airframe fittings used on aircraft with no load attenuators on the float bags.

The method 800 may continue at step 850 by installing the float bags with load attenuators on the aircraft. For example, the float bags may be attached to the load attenuators, and the load attenuators may be attached to the airframe fittings. Installing a load attenuator between the float bags and the airframe may allow a lighter weight airframe (e.g. an airframe with less mass) to be selected for use on the aircraft. Finally, the load attenuators are used at step 860 when an aircraft makes a water landing. Specifically, the load attenuators may deform as described above. Additionally, the load attenuator may allow the aircraft to sit lower in the water and consequently decrease the chance of the aircraft capsizing in higher sea states. In the case of a helicopter, a large overhead mass of equipment may be present, for example, the transmission, rotor, and engines may all be located at the top of the aircraft. Thus, lowering the entire aircraft will decrease the center of gravity and increase flotation stability.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure, provided that they are covered by the text of the appended claims. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R₁, and an upper limit, Rᵤ, is disclosed, any number falling within the range is specifically disclosed. In particular, the following numbers within the range are specifically disclosed: R=R₁+k*(Rᵤ-R₁), wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ..., 95 percent, 96 percent, 97 percent, 98 percent, 99 percent, or 100 percent. Unless otherwise stated, the term "about" shall mean plus or minus 10 percent of the subsequent value. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow.

## Claims

1. An apparatus for an aircraft (100) having at least one airframe fitting (160), the apparatus comprising:
a float bag (120) comprising:
an air bladder (210) configured to inflate when the aircraft (100) lands in water;
a girt (220, 240) coupled to the air bladder (210) and configured to enable the air bladder (210) to be attachable to the airframe fitting (160) of the aircraft (100);
**characterized by**
a textile load attenuator (250a) comprising a fabric body, the textile load attenuator (250a) adopting a tear-webbing configuration with a fold (252) and a plurality of stitches (254) in the fold or a tear-fabric configuration wherein the fabric has two sides woven together, the textile load attenuator (250a) being coupled to the girt (220, 240) and arranged to be positioned between the girt (220, 240) and the airframe fitting (160) of the aircraft (100), the textile load attenuator (250a) configured to mechanically deform by at least partially tearing in response to a tensile force without disconnecting the float bag (120) from the airframe fitting (160).

2. The apparatus of claim 1, wherein the textile load attenuator (250a) has a "T" configuration, including a first arm (251), the fold (252) and a second arm (253).

3. The apparatus of claim 1, wherein:
(i) a density of the stiches (254) is varied across the fold (252); or
(ii) wherein the stitches (254) comprise a plurality of thread types, and wherein the thread types are varied across the fold (252).

4. The apparatus of any preceding claim, wherein the float bag (120) is configured to be attachable to the airframe of the aircraft, or wherein the float bag (120) is configured to be attachable to the landing gear (130) of the aircraft (180).

5. The apparatus of claim 1, further comprising:
an upper load girt (220) comprising two upper arms, wherein the upper load girt (220) is coupled to the air bladder (210) and configured to attach the air bladder (210) to a respective airframe fitting of the aircraft (100) via each of the two upper arms;
a pair of upper load girt textile load attenuators each coupled to a respective one of the upper load girt arms and configured to be positioned between the upper load girt arms and the respective airframe fittings of the aircraft when the float bag (120) is attached to the aircraft;
a lower load girt (240) comprising two lower arms, wherein the lower load girt is coupled to the air bladder (210) and configured to attach the air bladder (210) to a respective airframe fitting of the aircraft (100) via each of the two lower arms; and
a pair of lower load girt textile load attenuators each coupled to a respective one of the lower load girt arms and configured to be positioned between the lower load girt arms and the respective airframe fittings of the aircraft when the float bag (120) is attached to the aircraft (100).

6. An aircraft comprising:
at least one airframe fitting; and
an apparatus according to any of claims 1 to 5;

7. A method of assembling the apparatus of claim 1, the method comprising:
coupling an air bladder (210) to a girt (220, 240);
configuring the girt (220, 240) such that it is attachable to at least one airframe fitting (160) of an aircraft airframe to enable the air bladder (210) to the be connected to the airframe;
**characterized by**
coupling a textile load attenuator (250a) to the girt (220, 240) to position the textile load attenuator (250a) between the girt and the airframe fitting (160) when the apparatus is connected to the aircraft (100), the textile load attenuator (250a) comprising a fabric body, the textile load attenuator (250a) adopting a tear-webbing configuration with a fold (252) and a plurality of stitches (254) in the fold or a tear-fabric configuration wherein the fabric has two sides woven together, the textile load attenuator (250a) being configured to mechanically deform by at least partially tearing in response to a tensile force without disconnecting the float bag (120) from the airframe fitting (160).

8. The method of claim 7, further comprising:
calculating a load that the aircraft (100) will experience when the aircraft makes a water landing; and
selecting the load attenuator (250) to have a tensile strength greater than the load.

## Patentansprüche

1. Vorrichtung für ein Luftfahrzeug (100) mit mindestens einem Flugwerkbeschlag (160), wobei die Vorrichtung umfasst:
ein Schwimmkissen (120), umfassend:
eine Luftblase (210), die so gestaltet ist, dass sie sich aufbläst, wenn das Flugzeug (100) auf Wasser landet;
eine Ummantelung (220, 240), die mit der Luftblase (210) gekoppelt ist und so gestaltet ist, dass sie es gestattet, die Luftblase (210) am Flugwerkbeschlag (160) des Luftfahrzeugs (100) anzubringen;
**gekennzeichnet durch**
einen textilen Lastdämpfer (250a), der einen Körper aus Gewebe umfasst, wobei der textile Lastdämpfer (250a) als aufreißbarer Gurt mit einer Faltung (252) und einer Mehrzahl von Stichen (254) in der Faltung oder als aufreißbares Gewebe gestaltet ist, wobei das Gewebe zwei Seiten aufweist, die miteinander verwoben sind, wobei der textile Lastdämpfer (250a) mit der Ummantelung (220, 240) gekoppelt ist und dafür ausgelegt ist, zwischen der Ummantelung (220, 240) und dem Flugwerkbeschlag (160) des Flugzeugs (100) angeordnet zu werden, wobei der textile Lastdämpfer (250a) so gestaltet ist, dass er sich als Reaktion auf eine Zugkraft mechanisch verformt, indem er zumindest teilweise aufreißt, ohne das Schwimmkissen (120) vom Flugwerkbeschlag (160) zu trennen.

2. Vorrichtung nach Anspruch 1, wobei der textile Lastdämpfer (250a) eine "T"-Konfiguration einschließlich eines ersten Armes (251), der Faltung (252) und eines zweiten Armes (253) aufweist.

3. Vorrichtung nach Anspruch 1, wobei
(i) eine Dichte der Stiche (254) über der Faltung (252) variiert; oder
(ii) wobei die Stiche (254) eine Mehrzahl von Fadentypen umfassen, und wobei die Fadentypen über der Faltung (252) variieren.

4. Vorrichtung nach einem der vorangehenden Ansprüche, wobei das Schwimmkissen (120) so gestaltet ist, dass es am Flugwerk des Luftfahrzeugs befestigt werden kann, oder wobei das Schwimmkissen (120) so gestaltet ist, dass es am Landegestell (130) des Luftfahrzeugs (180) befestigt werden kann.

5. Vorrichtung nach Anspruch 1, ferner umfassend:
eine obere Lastummantelung (220), die zwei obere Arme umfasst, wobei die obere Lastummantelung (220) mit der Luftblase (210) gekoppelt ist und dafür gestaltet ist, die Luftblase (210) über jeden der beiden oberen Arme an einem entsprechenden Flugrahmenbeschlag des Luftfahrzeugs (100) zu befestigen;
zwei textile Lastdämpfer der oberen Lastummantelung, die jeweils mit einem entsprechenden von den Armen der oberen Lastummantelung gekoppelt sind und dafür gestaltet sind, zwischen den Armen der oberen Lastummantelung und den entsprechenden Flugwerkbeschlägen des Luftfahrzeugs positioniert zu werden, wenn das Schwimmkissen (120) am Luftfahrzeug befestigt wird;
eine untere Lastummantelung (240), die zwei untere Arme umfasst, wobei die untere Lastummantelung mit der Luftblase (210) verbunden ist und dafür gestaltet ist, die Luftblase (210) über jeden der beiden unteren Arme an einem entsprechenden Flugrahmenbeschlag des Luftfahrzeugs (100) zu befestigen; und
zwei textile Lastdämpfer der unteren Lastummantelung, die jeweils mit einem entsprechenden von den Armen der unteren Lastummantelung verbunden sind und dafür gestaltet sind, zwischen den Armen der unteren Lastummantelung und den entsprechenden Flugwerkbeschlägen des Luftfahrzeugs positioniert zu werden, wenn das Schwimmkissen (120) am Luftfahrzeug (100) befestigt wird.

6. Luftfahrzeug, umfassend:
mindestens einen Flugwerkbeschlag; und
eine Vorrichtung nach einem der Ansprüche 1 bis 5.

7. Verfahren zum Zusammensetzen der Vorrichtung nach Anspruch 1, wobei das Verfahren umfasst:
Verbinden einer Luftblase (210) mit einer Ummantelung (220, 240);
Gestalten der Ummantelung (220, 240) auf solche Weise, dass sie an mindestens einem Flugwerkbeschlag (160) eines Luftfahrzeugflugwerks befestigt werden kann, um zu ermöglichen, dass die Luftblase (210) mit dem Flugwerk verbunden werden kann;
**gekennzeichnet durch**
Verbinden eines textilen Lastdämpfers (250a) mit der Ummantelung (220, 240), um den textilen Lastdämpfer (250a) zwischen der Ummantelung und dem Flugwerkbeschlag (160) zu positionieren, wenn die Vorrichtung mit dem Luftfahrzeug (100) verbunden wird, wobei der textile Lastdämpfer (250a) einen Körper aus Gewebe umfasst, wobei der textile Lastdämpfer (250a) als aufreißbarer Gurt mit einer Faltung (252) und einer Mehrzahl von Stichen (254) in der Faltung oder als aufreißbares Gewebe gestaltet ist, wobei das Gewebe zwei Seiten aufweist, die miteinander verwoben sind, wobei der textile Lastdämpfer (250a) so gestaltet ist, dass er sich als Reaktion auf eine Zugkraft mechanisch verformt, indem er zumindest teilweise aufreißt, ohne das Schwimmkissen (120) vom Flugwerkbeschlag (160) zu trennen.

8. Verfahren nach Anspruch 7, ferner umfassend:
Berechnen einer Last, die auf das Luftfahrzeug (100) wirkt, wenn das Luftfahrzeug auf Wasser landet; und
Auswählen des Lastdämpfers (250) so, dass er eine Zugfestigkeit aufweist, die größer ist als die Last.

## Revendications

1. Un appareil destiné à un aéronef (100) présentant au moins un raccord de cellule (160), l'appareil comprenant :
un boudin flottant (120) comprenant :
une chambre à air (210) conçue pour se gonfler lorsque l'aéronef (100) amerrit ;
une fixation (220, 240) accouplée à la chambre à air (210) et conçue pour activer la chambre à air (210) pour pouvoir être fixée au raccord de cellule (160) de l'aéronef (100) ;
**caractérisée par**
un atténuateur de charge textile (250a) composé d'un corps en tissu, l'atténuateur de charge textile (250a) adoptant une configuration de sangle déchirable comportant un pli (252) et une pluralité de points de liage (254) dans le pli ou une configuration de tissu déchirable dans laquelle le tissu présente deux côtés tressés ensemble, l'atténuateur de charge textile (250a) étant accouplé à la fixation (220, 240) et disposé de manière à être positionné entre la fixation (220, 240) et le raccord de cellule (160) de l'aéronef (100), l'atténuateur de charge textile (250a) conçu pour se déformer mécaniquement par au moins une déchirure de façon partielle en réponse à une force de traction sans détacher le boudin flottant (120) du raccord de cellule (160).

2. L'appareil de la revendication 1, dans laquelle l'atténuateur de charge textile (250a) présente une configuration en « T » comprenant un premier bras (251), le pli (252) et un second bras (253).

3. L'appareil de la revendication 1, dans laquelle :
(i) une densité des points de liage (254) varie sur toute l'étendue du pli (252) ; ou
(ii) dans laquelle les points de liage (254) comprennent une pluralité de types de fils et dans laquelle les types de fils varient sur toute l'étendue du pli (252).

4. L'appareil de l'une quelconque des revendications précédentes, dans laquelle le boudin flottant (120) est conçu pour pouvoir être fixé à la cellule de l'aéronef ou dans laquelle le boudin flottant (120) est conçu pouvoir être fixé sur le train d'atterrissage (130) de l'aéronef (180).

5. L'appareil de la revendication 1, comprenant en outre :
une fixation de charge supérieure (220) comprenant deux bras supérieurs, dans laquelle la fixation de charge supérieure (220) est accouplée à la chambre à air (210) et conçue pour fixer la chambre à air (210) à un raccord de cellule respectif de l'aéronef (100) par l'intermédiaire de chacun des deux bras supérieurs;
une paire d'atténuateurs de charge textile de fixation de charge supérieure chacun accouplé à un des bras de fixation de charge supérieure respectif et conçu pour être positionné entre les bras de fixation de charge supérieure et les raccords de cellule respectifs de l'aéronef lorsque le boudin flottant (120) est fixé à l'aéronef ;
une fixation de charge inférieure (240) comprenant deux bras inférieurs, dans laquelle la fixation de charge inférieure est accouplée à la chambre à air (210) et conçue pour fixer la chambre à air (210) à un raccord de cellule respectif de l'aéronef (100) par l'intermédiaire de chacun des deux bras inférieurs ; et
une paire d'atténuateurs de charge textile de fixation de charge inférieure chacun accouplé à un des bras de fixation de charge inférieure respectif et conçu pour être positionné entre les bras de fixation de charge inférieure et les raccords de cellule respectifs de l'aéronef lorsque le boudin flottant (120) est fixé à l'aéronef (100) ;

6. Un aéronef comprenant :
au moins un raccord de cellule ; et
un appareil selon une quelconque des revendications 1 à 5 ;

7. Un procédé d'assemblage de l'appareil de la revendication 1, le procédé comprenant :
l'accouplement d'une chambre à air (210) à une fixation (220, 240) ;
la configuration de la fixation (220, 240) de manière qu'elle puisse être fixée à au moins un raccord de cellule (160) d'une cellule de l'aéronef pour activer la chambre à air (210) pour être attachée à la cellule ;
**caractérisée par**
l'accouplement d'un atténuateur de charge textile (250a) à la fixation (220, 240) pour positionner l'atténuateur de charge textile (250a) entre la fixation et le raccord de cellule (160) lorsque l'appareil est attaché à l'aéronef (100), l'atténuateur de charge textile (250a) comprenant un corps en tissu, l'atténuateur de charge textile (250a) adoptant une configuration de sangle déchirable comportant un pli (252) et une pluralité de points de liage (254) dans le pli ou une configuration de tissu déchirable dans laquelle le tissu présente deux côtés tressés ensemble, l'atténuateur de charge textile (250a) étant conçu pour se déformer mécaniquement par déchirure au moins partiellement en réponse à une force de traction sans détacher le boudin flottant (120) du raccord de cellule (160).

8. Le procédé de la revendication 7, comprenant en outre :
le calcul d'une charge que l'aéronef (100) rencontrera lorsque l'aéronef effectue un amerrissage ; et
la sélection de l'atténuateur de charge (250) pour présenter une résistance à la traction supérieure à la charge.
